# EUROPÄISCHE PATENTSCHRIFT

(11) **EP 2 330 392 B1**
(45) Veröffentlichungstag und Bekanntmachung des Hinweises auf die Patenterteilung: **08.08.2012**
(21) Anmeldenummer: 09177727.6
(22) Anmeldetag: 02.12.2009
(51) Int. Cl.: G01F 23/02, G01F 23/42, G01B 3/08, G01B 5/06

(54) **Skalenanordnung für eine Füllstandsanzeige**
Scale assembly for a fill level display
Agencement d'échelles pour un affichage de l'état de remplissage

(43) Veröffentlichungstag der Anmeldung: 08.06.2011
(73) Patentinhaber: E.L.B Füllstandsgeräte Bundschuh GmbH & Co. KG, 64625 Bensheim (DE)
(72) Erfinder: Karlheinz, Gerlach, 35305 Grünberg (DE)
(74) Vertreter: Zenz

(56) Entgegenhaltungen:
- DE-A1- 2 842 728
- DE-A1- 2 916 925
- DE-A1- 10 162 072
- DE-A1- 19 812 965
- US-A- 2 313 920
- US-A- 3 466 966
- US-A- 3 494 244
- US-A1- 2005 235 749
- US-A1- 2007 234 799

## Beschreibung

Die Erfindung betrifft eine Skalenanordnung für eine Füllstandsanzeige für einen Behälter, wobei an einer Außenwand des Behälters eine sich in vertikaler Richtung erstreckende Skala befestigt ist, entlang derer sich ein Zeigerelement bewegt, das eine dem Füllstand des Behälters entsprechende vertikale Position einnimmt.

Bei derartigen Füllstandsanzeigen ist das Zeigerelement beispielsweise an einem Schwimmer befestigt, der auf der Oberfläche einer Flüssigkeitssäule schwimmt, die sich in einer mit dem Behälter verbundenen kommunizierenden Röhre befindet, wobei die Röhre neben der Skala angeordnet ist. Bei einer anderen bevorzugten Gestaltung ist das Zeigerelement an einem Gegengewicht befestigt, welches über einen Seilzug, der über den Behälterrand hinweg geführt ist, mit einem Schwimmer im Behälterinneren verbunden ist, wie beispielsweise in US 2005/0235749 A1 offenbart. Das Gegengewicht bewegt sich vorzugsweise innerhalb eines durchsichtigen Glas- oder Kunststoffrohrs. Benachbart zu diesem Rohr ist die Skala montiert. Die vertikal montierten Skalen derartiger Füllstandsanzeigen sind häufig mehrere Meter lang. Deshalb sind sie auch an mehreren Punkten entlang ihrer Länge an dem Rohr oder der Wandung des Behälters montiert. Häufig befinden sich derartige Behälter und Füllstandsanzeigen im Freien und sind demzufolge Temperaturschwankungen ausgesetzt. Infolge von durch diese Temperaturschwankungen bedingten thermischen Ausdehnungsdifferenzen kann es zu Durchbiegungen und Verformungen der Skalen und teilweise zu Ablösungen von den Halterungen kommen. Dies tritt insbesondere bei langen Skalen auf, bei denen mehrere Skalenabschnitte miteinander verbunden sind.

Bei anderen bekannten Skalenanordnungen sind beispielsweise Schriftfolien, welche die Skalenelemente darstellen, auf einem Kunststoffrohr, welche neben der Röhre angeordnet ist, aufgeklebt. Bei Verwendung dieser aus aufgeklebten Folien bestehenden Skalen kann es zu einer Ablösung aufgrund der thermisch bedingten Bewegungen sowie aufgrund von Alterungs- und Wettereinflüssen kommen.

Darüber hinaus werden herkömmliche Skalen üblicherweise aus langgestreckten Kunststoffprofilen hergestellt, welche durch Schraubverbindungen fest mit den das Zeigerelement führenden Rohren und/oder der Wandung des Behälters verbunden sind. Zu deren Montage sind Werkzeuge erforderlich.

Aufgabe der Erfindung ist es, eine einfach zu montierende Skalenanordnung für eine Füllstandsanzeige der oben genannten Art zu schaffen, bei der die oben genannten Nachteile, insbesondere Deformationen bei Temperaturschwankungen der Umgebung vermieden oder gemindert werden.

Diese Aufgabe wird erfindungsgemäß durch eine Skalenanordnung mit den Merkmalen des Patentanspruchs 1 gelöst. Bei der erfindungsgemäßen Skalenanordnung für eine Füllstandsanzeige für einen Behälter ist an einer Außenwand des Behälters eine sich in vertikaler Richtung erstreckende Skala befestigt, entlang derer sich ein Zeigerelement bewegt, das eine dem Füllstand des Behälters entsprechende vertikale Position einnimmt. Die Skala umfasst wenigstens eine langgestreckte Skalenplatte mit auf einer Vorderseite sichtbaren Skalenelementen (z.B. Skalenstriche und Ziffern) und mit wenigstens zwei in einem vorgegebenen Abstand angeordneten Montagebohrungen. An der Außenwand des Behälters sind zumindest zwei vertikal übereinander in dem vorgegebenen Abstand der Montagebohrungen der Skalenplatte(n) angeordnete Kunststoff-Halterungen befestigt. Jede Halterung weist wenigstens eine Bohrung und eine quer zur Bohrungsachse angeordnete Verbindungsfläche auf und ist mit der Verbindungsfläche auf die Außenwand des Behälters aufgeschweißt oder aufgeklebt. Jeweils ein Kunststoff-Verbindungsstecker, der aus einem Kopf und einem zylindrischen Stift mit mehreren radial umlaufenden Vorsprüngen oder Nuten besteht, ist durch eine Montagebohrung der Skalenplatte hindurch in eine zugeordnete Bohrung einer Halterung eingesteckt, wobei die Vorsprünge bzw. Nuten des Stifts in die Bohrung derart eingreifen, dass der Stift des Verbindungssteckers in der Bohrung durch Kraftschluss festgehalten wird. Eine der Halterungen ist relativ zu der zugeordneten Montagebohrung bzw. relativ zu den zugeordneten Montagebohrungen der Skalenplatte nicht verschiebbar und bestimmt somit die vertikale Position der Skala an der Außenwand des Behälters. Die der anderen Halterung bzw. die übrigen Halterungen zugeordnete Montagebohrung bzw. zugeordneten Montagebohrungen hat bzw. haben einen gegenüber dem Durchmesser des Stifts des Verbindungssteckers vergrößerten Durchmesser oder ist bzw. sind ein sich in der Längsrichtung der Skalenplatte erstreckendes Langloch, um eine Verschiebung der Skalenplatte relativ zu dieser Halterung bzw. zu diesen Halterungen zu ermöglichen.

Bei der erfindungsgemäßen Skalenanordnung wird eine sehr einfach montierbare Verbindungstechnik zwischen Skalenplatte bzw. Skalenplatten und Halterungen verwendet, welche Kunststoff-Verbindungsstecker der oben genannten Art verwendet, die in entsprechend angepasste Bohrungen eingreifen. Vorzugsweise haben die zylindrischen Stifte der Verbindungsstecker in ihrem in die Bohrung eingreifenden Abschnitt ein aus umlaufenden Vorsprüngen und Nuten bestehendes Außenprofil, welches so geformt ist, dass es relativ einfach in die Bohrung einschiebbar, aber nur mit großer Kraft aus der Bohrung wieder herausziehbar ist. Dies wird vorzugsweise dadurch erreicht, dass die Vorsprünge - von der Spitze des Stifts aus betrachtet - zunächst einen relativ flachen Anstieg aufweisen, dann aber senkrecht oder zumindest sehr steil oder sogar mit einer Hinterschneidung wieder auf den geringeren Durchmesser des Stifts abfallen. Diese Vorsprünge bilden dann eine Art Widerhaken, der das Festhalten der Skalenplatte an den Halterungen sichert. Darüber hinaus ist es erfindungsgemäß vorgesehen, dass nur eine der Halterungen relativ zu der zugeordneten Montagebohrung bzw. den zugeordneten Montagebohrungen der Skalenplatte nicht verschiebbar ist und somit die vertikale Position der Skala an der Außenwand des Behälters bestimmt. Die übrigen Montagebohrungen sind so gestaltet, dass sie trotz ihrer Befestigung an den zugeordneten Halterungen zumindest in vertikaler Richtung bei einigen Ausführungsformen auch geringfügig in horizontaler Richtung bewegt werden können. Die so verbleibende Beweglichkeit in vertikaler Richtung kompensiert Längenänderungen aufgrund sich ändernder Umgebungstemperaturen, während die Beweglichkeit in horizontaler Richtung es gestattet, die Skala auch dann exakt senkrecht auszurichten, wenn die an der Behälterwand montierten Halterungen nicht exakt vertikal untereinander angeordnet sind. Darüber hinaus sind sämtliche Elemente der erfindungsgemäßen Skalenanordnung aus Kunststoff gefertigt, was sie unempfindlich gegenüber einer Reihe chemischer Substanzen, insbesondere unempfindlich gegenüber Säuren macht.

Bei einer bevorzugten Ausführungsform der erfindungsgemäßen Skalenanordnung ist der Durchmesser derjenigen Montagebohrung bzw. -bohrungen der Skalenplatte, die der die vertikale Position der Skala an der Außenwand bestimmenden Halterung zugeordnet ist bzw. sind, an den Querschnitt des zylindrischen Stifts des hindurch geführten Verbindungssteckers angepasst. Beispielsweise ist der Stift kreiszylindrisch und ist sein Außendurchmesser nur geringfügig kleiner als der Durchmesser der Montagebohrung. Bei einer alternativen Ausführungsform kann der Stift auch beispielsweise einen quadratischen Querschnitt haben, wobei seine Diagonale etwa dem Durchmesser der Montagebohrung entspricht. Bei alternativen Ausführungsformen kann die Montagebohrung auch ein Langloch sein, welches sich in horizontaler Richtung quer zur Längsrichtung der Skala erstreckt. Bei dieser Ausführungsform ist eine horizontale Verschiebbarkeit der Skala zu Justagezwecken möglich. Bei einer bevorzugten Ausführungsform ist die Halterung, die die vertikale Position der Skala an der Außenwand des Behälters bestimmt, die zuoberst angeordnete Halterung. Vorzugsweise ist die zuoberst angeordnete Halterung eine Platte mit wenigstens zwei horizontal nebeneinander angeordneten Bohrungen, an der die zuoberst angeordnete Skalenplatte (entweder die einzige Skalenplatte oder die oberste der mehreren Skalenplatten) mit einer entsprechenden Anzahl von Kunststoff-Verbindungssteckern befestigt ist. Bei dem bevorzugten Ausführungsbeispiel ist die zuoberst angeordnete Halterung eine rechteckige Platte mit zwei horizontal beabstandet angeordneten Bohrungen. An entsprechender Stelle weist die Skalenplatte zwei horizontal beabstandet nebeneinander angeordnete Montagebohrungen auf, durch die zwei Kunststoff-Verbindungsstecker hindurchgeführt sind.

Bei einer Ausführungsform der Erfindung ist zumindest ein Teil der Kunststoff-Halterungen kreiszylinderförmig, wobei die Bohrung zentral entlang der Zylinderachse angeordnet ist. Bei einer bevorzugten Ausführungsform sind sämtliche Halterungen mit Ausnahme der zuoberst angeordneten Halterung in dieser Weise ausgebildet.

Bei einer anderen Ausführungsform der erfindungsgemäßen Skalenanordnung weist zumindest ein Teil der Kunststoff-Halterungen Bohrungen mit an der Bohrungswandung radial umlaufenden Nuten oder Vorsprüngen auf, wobei die Vorsprünge bzw. Nuten des Stifts des Verbindungssteckers in die Nuten bzw. Vorsprünge der Bohrungen derart eingreifen, dass der Stift des Verbindungssteckers in der zugehörigen Bohrung durch Kraft-Formschluss festgehalten wird. Bei entsprechender Ausbildung der ineinandergreifenden Nuten und Vorsprünge entsteht eine sogenannte Schnapp- oder Einrast-Verbindung, bei der ein Vorsprung des Stifts beim Eindrücken in die Bohrung einen entsprechenden Vorsprung der Bohrung hintergreift, so dass der Stift nur noch mit großer Kraft herausgezogen werden kann und somit gesichert ist.

Bei einer bevorzugten Ausführungsform der erfindungsgemäßen Skalenanordnung sind die Köpfe der Kunststoff-Verbindungsstecker kreisförmig und flach ausgebildet, wobei deren Durchmesser größer als der vergrößerte Durchmesser der anderen Montagebohrung bzw. der übrigen Montagebohrungen der Skalenplatte ist. Vorzugsweise sind die kreisförmigen Köpfe der Verbindungsstecker nach außen gewölbt, so dass ihr äußerer Randbereich auf die Oberseite der Skalenplatte drückt. Der Durchmesser des Kopfes ist dabei so gewählt, dass auch bei asymmetrischem Sitz des Verbindungssteckers in einer vergrößerten Montagebohrung noch im Wesentlichen der gesamte Randbereich des Kopfes auf der Oberseite der Skalenplatte aufliegt.

Eine Weiterbildung der erfindungsgemäßen Skalenanordnung ist **dadurch gekennzeichnet, dass** die Skala wenigstens zwei langgestreckte ebene rechteckige Skalenplatten umfasst, wobei die Skalenplatten an den einander zugewandten kurzen Seiten über eine auf den Rückseiten der Skalenplatten aufliegende Verbindungsplatte miteinander verbunden sind. Die Skalenplatten weisen an den aneinander zugewandten Enden Bohrungen auf, deren Positionen den Positionen von zugeordneten Bohrungen in der Verbindungsplatte entsprechen. Durch die Bohrungen sind weitere aus einem Kopf und einem zylindrischen Stift mit mehreren radial umlaufenden Vorsprüngen bestehende Kunststoff-Verbindungsstecker hindurchgeführt. Die Stifte sind entweder in Bohrungen der Verbindungsplatte eingesteckt, die umlaufende Nuten oder Vorsprünge aufweisen. Alternativ werden hinter der Verbindungsplatte auf die Stifte Gegenstücke aufgesteckt, die Bohrungen mit umlaufenden Nuten oder Vorsprüngen aufweisen. Diese aus mehreren Skalenplatten zusammensteckbare Skalenanordnung gestattet eine flexible Anpassung an unterschiedliche Behälterhöhen, somit ein Baukastensystem. Bei einer bevorzugten Ausführungsform wird die Skalenanordnung aus einem Baukastensystem gebildet, welches neben den Skalenplatten Verbindungsplatten, oberste Halterungen, weitere Halterungen und Verbindungsstecker umfasst. Bei einer Ausführungsform umfasst das Baukastensystem zusätzliche Gegenstücke, welche hinter den Verbindungsplatten auf die Verbindungsstecker aufsteckbar sind.

Eine bevorzugte Weiterbildung der erfindungsgemäßen Skalenanordnung ist **dadurch gekennzeichnet, dass** die Skalenplatte bzw. die Skalenplatten aus wenigstens einer auf der Vorderseite angeordneten ersten Kunststoffschicht mit einer ersten Färbung und einer dahinter angeordneten zweiten Kunststoffschicht mit einer zur ersten Färbung kontrastierenden zweiten Färbung besteht bzw. bestehen. Zusätzlich können beispielsweise weitere Kunststoffschichten dahinter angeordnet sein. Sichtbare Skalenelemente werden hierbei dadurch erzeugt, dass die erste Kunststoffschicht im Bereich der Skalenelemente derart entfernt wird, dass die dahinter liegende zweite Kunststoffschicht sichtbar wird. Beispielsweise besteht die oberste, erste Kunststoffschicht aus einem weißen Kunststoff und die dahinter angeordnete zweite Kunststoffschicht aus einem schwarzen Kunststoff. Die Skalenelemente (d.h. die Skalenstriche und Ziffern) werden dadurch erzeugt, dass beispielsweise die weiße Kunststoffschicht abgetragen (beispielsweise gefräst) wird.

Eine bevorzugte Ausführungsform ist **dadurch gekennzeichnet, dass** die Kunststoff-Halterungen und die Außenwand des Behälters aus gleichem Kunststoffmaterial gefertigt und die Kunststoff-Halterungen mit ihrer Verbindungsfläche auf die Außenwand aufgeschweißt sind. Beispielsweise bestehen die Kunststoff-Halterungen aus Polypropylen.

Vorteile und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsformen näher beschrieben. In den Zeichnungen zeigen:
Figur 1 eine schematische Darstellung, die einen Behälter mit einer an der Behälteraußenwand befestigten Skalenanordnung darstellt;
Figur 2 die Frontansichten dreier Skalenplatten einer dreiteiligen Skalenanordnung sowie einer Verbindungsplatte zum Verbinden der Skalenplatten;
Figuren 3A und 3B eine Draufsicht bzw. eine Schnittansicht der obersten Halterung der in Figur 1 dargestellten Skalenanordnung;
Figuren 4A und 4B eine Draufsicht sowie eine Schnittansicht der übrigen Halterungen der in Figur 1 schematisch dargestellten Skalenanordnung;
Figur 5 eine schematische Draufsicht auf eine andere Ausführungsform einer Skalenplatte der erfindungsgemäßen Skalenanordnung;
Figur 6 eine schematische Draufsicht auf eine weitere Ausführungsform einer Skalenplatte der erfindungsgemäßen Skalenanordnung;
Figur 7 eine alternative Ausführungsform einer Verbindungsplatte für die in den Figuren 5 und 6 dargestellten Ausführungsformen der Skalenplatten; und
Figur 8 eine Ausführungsform eines Verbindungssteckers mit einem zugehörigen Gegenstück zum Verbinden der Skalenplatten mit der Verbindungsplatte.

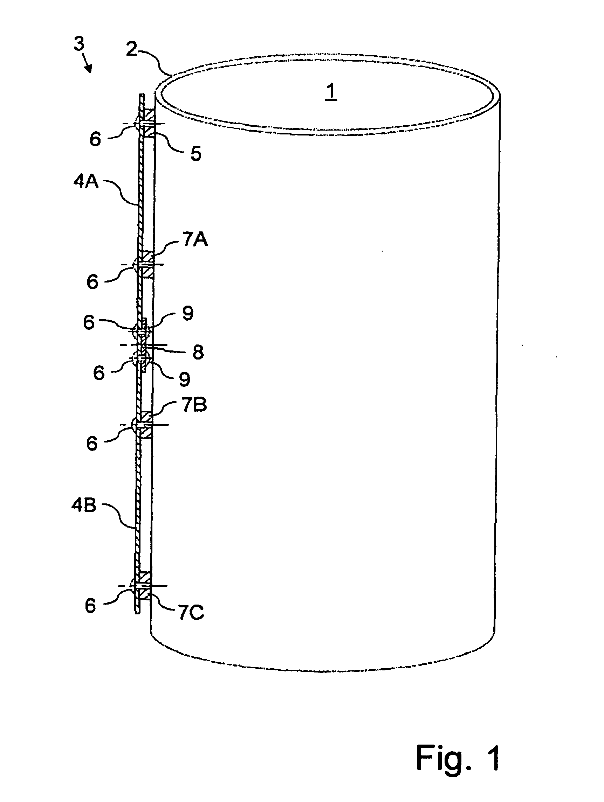

Figur 1 zeigt eine schematische Darstellung eines Behälters 1, an dessen Außenwand 2 eine erfindungsgemäße Skalenanordnung 3 befestigt ist. Die Skalenanordnung 3 ist geschnitten dargestellt. In Figur 1 nicht dargestellt ist das sich in vertikaler Richtung parallel zu der Skalenanordnung 3 erstreckende Rohr, das ein Zeigerelement aufnimmt. Das Zeigerelement ist beispielsweise mit einem Schwimmer verbunden, der sich in dem Rohr vertikal bewegen kann, wobei es sich bei dem Rohr um eine mit dem Behälter 1 verbundene kommunizierende Röhre handeln kann. Bei einer alternativen Ausführungsform ist das Zeigerelement ein Gewicht, das über einen über Rollen laufenden Seilzug, der über den Rand des Behälters 1 geführt ist, mit einem im Behälterinneren angeordneten Schwimmer verbunden ist. Anstelle der Führung über Rollen kann der Seilzug auch in einem Rohr geführt sein.

Die an der Außenwand 2 des Behälters 1 befestige Skalenanordnung 3 besteht bei dem in Figur 1 gezeigten Ausführungsbeispiel aus zwei übereinander angeordneten Skalenplatten 4A und 4B. Die Skalenplatten 4A, 4B sind miteinander über eine Verbindungsplatte 8 verbunden, wobei die Skalenplatten 4A und 4B mit der Verbindungsplatte 8 mit Hilfe einer Steckverbindung verbunden sind, wobei die Steckverbindung durch Bohrungen der Platten hindurch geführte Verbindungsstecker 6 und an der entgegengesetzten Seite auf die Stifte der Verbindungsstecker 6 aufgesetzte Gegenstücke 9 umfasst. Die miteinander verbundenen Skalenplatten 4A, 4B sind über weitere Verbindungsstecker 6 mit Halterungen 5, 7A, 7B und 7C verbunden, welche ihrerseits an der Außenwand 2 des Behälters 1 befestigt sind. Die genannten Elemente der Skalenanordnung 3 werden anhand der nachfolgenden Figuren näher beschrieben.

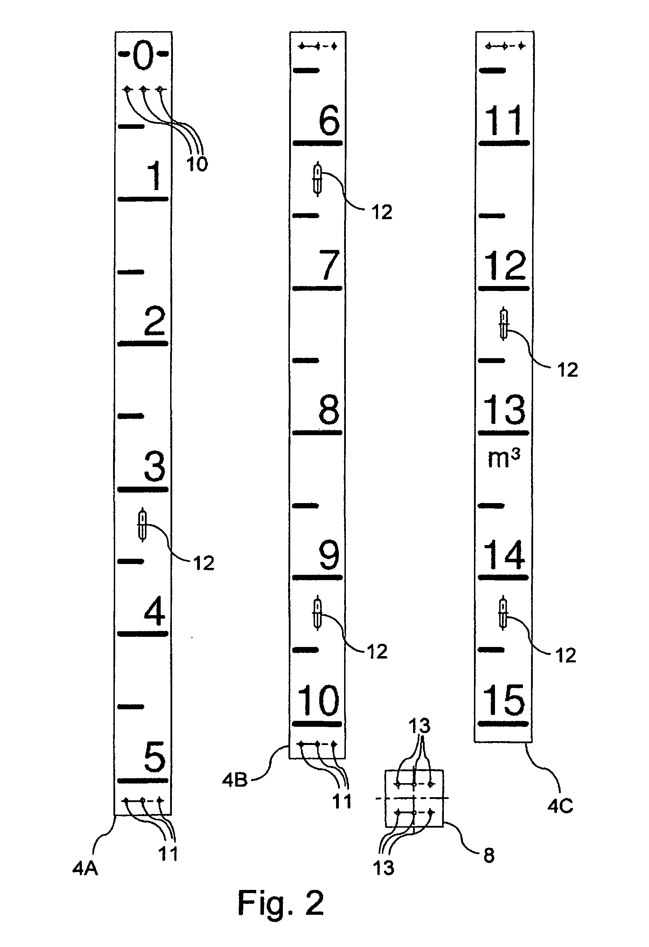

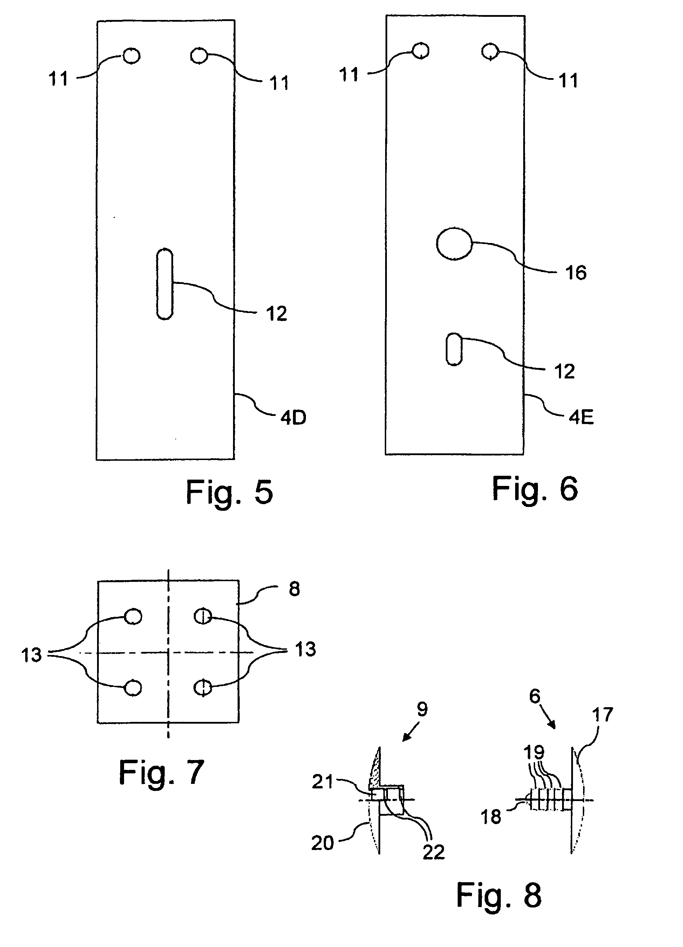

Figur 2 zeigt eine Ausführungsform von drei Skalenplatten 4A, 4B und 4C, welche miteinander zu einer längeren Skala verbunden werden. Zum Verbinden der Skalenplatten 4A, 4B und 4C dient eine ebenfalls in Figur 2 gezeigte Verbindungsplatte 8. Die Skalenplatten 4A, 4B und 4C weisen an den miteinander zu verbindenden Enden jeweils drei horizontal benachbarte Bohrungen 11 auf, und die Verbindungsplatte 8 weist zwei übereinander angeordnete Reihen von jeweils drei Bohrungen 13 auf, wobei die Anordnung der Bohrungen 13 der Anordnung der Bohrungen 11 entspricht. Die Verbindungsplatte 8 wird hinter den Enden der miteinander zu verbindenden Skalenplatten angeordnet. Dann werden durch die Bohrungen 11 an den Enden der Skalenplatten 4A, 4B und 4C und anschließend durch die Bohrungen 13 der Verbindungsplatte 8 jeweils Verbindungsstecker 6 hindurch gesteckt, so dass die Köpfe der Verbindungsstecker 6 auf der Frontseite der Skalenplatten aufliegen und die Stifte der Verbindungsstecker 6 durch die Bohrungen hindurch auf der Rückseite der Verbindungsplatte 8 austreten. Auf die austretenden Abschnitte der Stifte der Verbindungsstecker werden Gegenstücke aufgesetzt, wobei die Stifte der Verbindungsstecker 6 in Bohrungen der Gegenstücke 9 kraftformschlüssig gehalten werden. Die Verbindungsstecker 6 und die zugehörigen Gegenstücke 9 werden unten anhand von Figur 8 näher beschrieben.

Die in Figur 2 dargestellten Skalenplatten weisen Skalenelemente, wie beispielsweise Skalenstriche, Ziffern und die Angabe "m³", auf. Bei einer bevorzugten Ausführungsform bestehen die Skalenplatten 4A, 4B und 4C aus einer auf der Frontseite angeordneten ersten Kunststoffschicht mit einer weißen Färbung und einer dahinter angeordneten zweiten Kunststoffschicht mit einer zur ersten Schicht kontrastierenden, schwarzen Färbung. Die Skalenelemente werden dadurch erzeugt, dass die weiße Kunststoffschicht im Bereich der Skalenelemente entfernt wird, so dass die dahinter liegende schwarze Kunststoffschicht sichtbar wird.

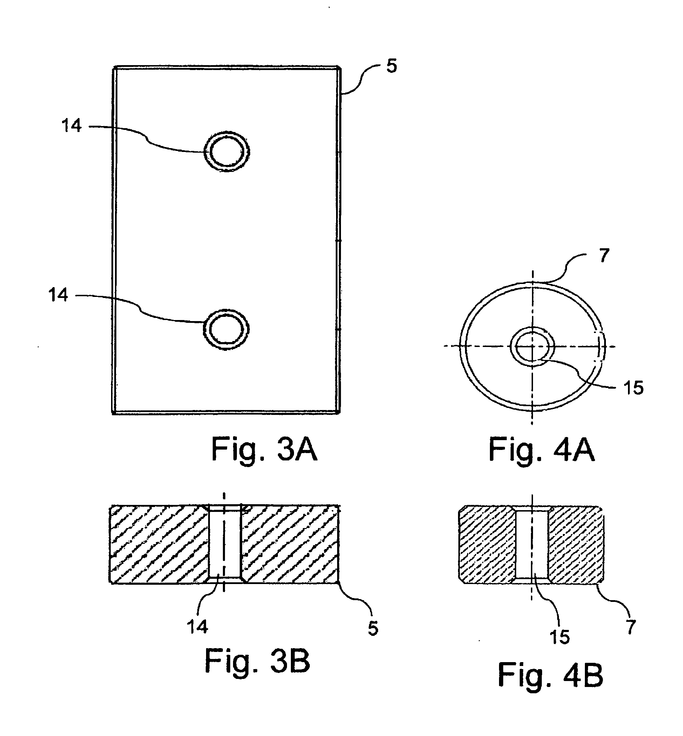

Figuren 3A und 3B zeigen eine Draufsicht bzw. eine Querschnittsseitenansicht einer Halterung 5, welche - wie in Figur 1 zu sehen ist - die oberste Halterung der Skalenanordnung 3 darstellt. Die oberste Halterung 5 weist bei dem in Figur 3 dargestellten Ausführungsbeispiel zwei Bohrungen 14 auf. Die Halterung 5 wird derart auf die Außenwandung 2 des Behälters 1 aufgeklebt oder aufgeschweißt, dass die beiden Bohrungen 14 horizontal nebeneinander angeordnet sind. Die in Figur 1 gezeigte oberste Skalenplatte 4A weist in der Nähe des oberen Endes zwei Montagebohrungen auf, deren Abstand mit dem Abstand der zwei Bohrungen 14 der Halterung 5 übereinstimmt. Zwei Verbindungsstecker 6, wie sie beispielsweise in Figur 8 gezeigt sind, werden von außen durch die Montagebohrungen der Skalenplatte 4A hindurch in die Bohrungen 14 der Halterung 5 eingesteckt. Die Verbindungsstecker 6 bestehen aus einem Kopf und einem zylindrischen Stift mit mehreren radial umlaufenden Vorsprüngen, wobei die Vorsprünge in die Bohrungen 14 derart eingreifen, dass die Stifte der Verbindungsstecker 6 in den Bohrungen 14 durch Kraftschluss festgehalten werden. Durch diese Verbindung der Skalenplatte 4A mit der obersten Halterung 5 wird die vertikale Position der Skala an der Außenwand 2 des Behälters 1 bestimmt.

Bei der in Figur 2 gezeigten Ausführungsform weist die oberste Skalenplatte 4A in der Nähe ihres oberen Endes nicht zwei sondern drei nebeneinander angeordnete Montagebohrungen 10 auf. Die zugehörige oberste Halterung, welche nicht dargestellt ist, weist ebenfalls drei Bohrungen 14 zur kraftschlüssigen Aufnahme der Stiftenden der hindurch gesteckten Verbindungsstecker 6 auf.

Die Figuren 4A und 4B zeigen eine Draufsicht bzw. eine geschnittene Seitenansicht einer Halterung 7 zur Befestigung der Skalenplatten 4A, 4B an der Außenwand 2 des Behälters 1, wie es in Figur 1 gezeigt ist. Die in den Figuren 4A und 4B gezeigten Halterungen sind von kreiszylindrischer Form und weisen entlang ihrer Achse eine Bohrung 15 auf, in welche ein Stift eines durch eine Montagebohrung in der Skalenplatte hindurch gesteckten Verbindungssteckers 6 eingeführt wird. Wiederum wird der Stift des Verbindungssteckers in der Bohrung 15 der Halterung 7 kraftschlüssig gehalten.

Während die Montagebohrungen 10, durch welche die Stifte in die Bohrungen der obersten Halterung 5 hindurch gesteckt werden, in ihrem Durchmesser an den Außendurchmesser der Stifte angepasst sind, so dass kein oder nur ein geringes Spiel verbleibt, handelt es sich bei dem Montagebohrungen 12, durch welche die Verbindungsstecker 6 in die Bohrungen 15 der Halterungen 7 eingesteckt werden, um Langlöcher, welche sich in vertikaler Richtung erstrecken. Die Verwendung dieser Langlöcher 12 gestattet eine vertikale Verschiebung der mit der Halterung 7 verbundenen Skalenplatten zur Kompensation thermischer Ausdehnungen.

Die Figuren 5 und 6 zeigen schematisch alternative Ausführungsformen von erfindungsgemäßen Skalenplatten 4D und 4E. Die in Figur 5 dargestellte Skalenplatte 4D weist wiederum ein Langloch 12 zum Verbinden der Skalenplatte mit einer an der Behälterwand 2 befestigten Halterung 7 auf. An einem Ende weist die Skalenplatte 4B zwei Bohrungen 11 auf, durch welche diejenigen Verbindungsstecker 6 hindurchgeführt werden, die die Skalenplatte 4D mit der in Figur 7 gezeigten Verbindungsplatte 8 verbinden.

Figur 6 zeigt eine alternative Ausführungsform. Diese weist zunächst, wie auch die Ausführungsform gemäß Figur 5, an einem Ende zwei Bohrungen 11 auf, durch welche die Verbindungsstecker 6 zum Verbinden der Skalenplatte 4E mit der in Figur 7 dargestellten Verbindungsplatte hindurchgeführt werden. Die Ausführungsform gemäß Figur 6 zeigt schematisch eine Skalenplatte 4E, die neben einem (hier verkürzt dargestellten) Langloch 12 außerdem eine Montagebohrung 16 aufweist, wobei die Montagebohrung 16 einen gegenüber dem Durchmesser des Stifts des Verbindungssteckers 6 vergrößerten Durchmesser hat. Die Montagebohrung 16 ist einerseits größer als der Durchmesser des Stifts des Verbindungssteckers; andererseits ist der Durchmesser der Montagebohrung 16 geringer als der des Kopfes des Verbindungssteckers 6, so dass der Rand des Kopfes des Verbindungssteckers 6 auf der Oberfläche der Skalenplatte 4E aufliegen kann. Die Montagebohrung 16 mit vergrößertem Durchmesser gestattet sowohl ein Verschieben der Skalenplatte 4E in der vertikalen Richtung (zum Ausgleich thermischer Ausdehnungen) als auch ein Spiel in horizontaler Richtung. Dies gestattet eine vertikale Ausrichtung der Skalenplatte 4E auch dann, wenn aufgrund herstellungsbedingter Toleranzen die der Montagebohrung 16 zugeordnete Halterung 7 gegenüber der Mittellinie der gewünschten Skalenposition einen horizontalen Versatz aufweist.

Figur 7 zeigt eine alternative Ausführungsform einer Verbindungsplatte 8, die zum Verbinden der in den Figuren 5 und 6 gezeigten Skalenplatten geeignet ist. Diese Ausführungsform weist jeweils zwei den zu verbindenden Enden der Skalenplatten zugeordnete Bohrungen 13 auf.

Figur 8 zeigt auf der rechten Seite einen Verbindungsstecker 6, wie er zum Verbinden der Skalenplatten 4 mit den Halterungen 5 und 7 und zum Verbinden der Skalenplatten 4 mit der Verbindungsplatte 8 eingesetzt wird. Der Verbindungsstecker 6 umfasst einen Kopf 17 und einen Stift 18. Der Stift 18 weist bei dem in Figur 8 gezeigten Ausführungsbeispiel vier Vorsprünge 19 auf. Die Vorsprünge 19 bilden bei einer bevorzugten Ausführungsform eine etwa sägezahnförmige Kontur. Das heißt, der Durchmesser des Stifts 18 nimmt ausgehend von seinem dem Kopf 17 abgewandten Ende zunächst allmählich in Richtung des Kopfes 17 zu und fällt dann abrupt am Ende des Vorsprungs wieder auf den geringeren Durchmesser ab. Der Kopf 17 ist flach ausgebildet und weist eine nach außen weisende gewölbte Oberfläche sowie eine der Skalenplatte zugewandte ebene Auflagefläche auf. Der Kopf 17 kann auch so ausgebildet sein, dass die der Skalenplatte zugewandte Auflagefläche sich auf eine ringförmige Fläche am äußeren Rand des Kopfes 17 beschränkt.

Auf der linken Seite der Figur 8 ist ein Gegenstück 9 zur kraft-formschlüssigen Verbindung mit dem Verbindungsstecker 6 gezeigt. Dort, wo der Verbindungsstecker 6 durch Montagebohrungen 11 an den Enden der Skalenplatten 4 und entsprechende Bohrungen 13 in der Verbindungsplatte 8 hindurch gesteckt ist, wird rückseitig das Gegenstück 9 aufgesteckt. Das Gegenstück 9 weist ebenfalls einen Kopf 20 und einen zylindrischen Abschnitt auf. Durch den zylindrischen Abschnitt und den Kopf 20 ist eine Bohrung 21 hindurchgeführt. Die Wandung der Bohrung 21 weist ringförmig umlaufende Vorsprünge 22 auf. Zur Montage wird der zylindrische Abschnitt des Gegenstücks 9 in eine entsprechend angepasste Aufnahmebohrung 13 der Verbindungsplatte 8 eingesteckt. Anschließend wird der Stift 18 des Verbindungssteckers 6 durch die Montagebohrungen 11 der Skalenplatte 4 hindurchgeführt und in die Bohrung 21 des Gegenstücks 9 eingesteckt. Die Vorsprünge 19 des Stifts 18 des Verbindungssteckers 6 hintergreifen dann die Vorsprünge 22 in der Bohrung 21 des Gegenstücks 9. Dies führt zu einer festen kraft-formschlüssigen Verbindung des Verbindungssteckers 6 mit dem Gegenstück 9 und somit der Skalenplatte 4 mit der Verbindungsplatte 8.

Zur Montage der Skalenanordnung 3 an der Außenwand 2 des Behälters 1 wird beispielsweise wie folgt vorgegangen. Die Halterungen 5 und 7 werden auf der Außenwand 2 des Behälters 1 aufgeschweißt. Beispielsweise bestehen die Halterungen 5 und 7 aus Polypropylen, wie auch die Wandung 2 des Behälters 1. Hierbei wird ein thermisches Schweißverfahren eingesetzt. Damit die Halterungen 5 und 7 richtig positioniert werden, wird eine entsprechende Lehre angelegt. Toleranzen in der Positionierung der Halterungen 7 können ausgeglichen werden, indem beispielsweise Skalenplatten 4 mit einer vergrößerten Montagebohrung 16 eingesetzt werden. Die Skalenplatten 4 werden mit Hilfe der Verbindungsplatten 8 und der Verbindungsstecker 6 und zugehörigen Gegenstücke 9 miteinander verbunden. Die Skalenplatten 4 werden dann über weitere Verbindungsstecker 6 mit den Halterungen 5 und 7 verbunden. Bei der erfindungsgemäßen Skalenanordnung 3 ist eine Montage ohne Werkzeug möglich.

## Patentansprüche

1. Skalenanordnung (3) für eine Füllstandsanzeige für einen Behälter (1), wobei an einer Außenwand (2) des Behälters (1) eine sich in vertikaler Richtung erstreckende Skala befestigt ist, entlang derer sich ein Zeigerelement bewegt, das eine dem Füllstand des Behälters (1) entsprechende vertikale Position einnimmt,
wobei die Skala wenigstens eine langgestreckte Skalenplatte (4A - 4E) mit auf einer Vorderseite sichtbaren Skalenelementen und mit wenigstens zwei in einem vorgegebenen Abstand angeordneten Montagebohrungen (10, 12, 16) umfasst,
**dadurch gekennzeichnet, dass** an der Außenwand (2) des Behälters (1) zumindest zwei vertikal übereinander in dem vorgegebenen Abstand der Montagebohrungen (10, 12, 16) der Skalenplatten (4A - 4E) angeordnete Kunststoff-Halterungen (5, 7, 7A, 7B) befestigt sind,
wobei jede Halterung (5, 7, 7A, 7B) wenigstens eine Bohrung (14, 15) und eine quer zur Bohrungsachse angeordnete Verbindungsfläche aufweist und mit der Verbindungsfläche auf die Außenwand (2) des Behälters (1) aufgeschweißt oder aufgeklebt ist,
wobei jeweils ein Kunststoff-Verbindungsstecker (6), der aus einem Kopf (17) und einem zylindrischen Stift (18) mit mehreren radial umlaufenden Vorsprüngen (19) oder Nuten besteht, durch eine Montagebohrung (10, 12, 16) der Skalenplatte (4A - 4E) hindurch in eine zugeordnete Bohrung (14, 15) einer Halterung (5, 7, 7A, 7B) eingesteckt ist, wobei die Vorsprünge (19) bzw. Nuten des Stifts in die Bohrung derart eingreifen, dass der Stift (18) des Verbindungssteckers (6) in der Bohrung (14, 15) durch Kraftschluss festgehalten wird,
wobei eine der Halterungen (5) relativ zu der zugeordneten Montagebohrung bzw. den zugeordneten Montagebohrungen (10) der Skalenplatte (4A) nicht verschiebbar ist und somit die vertikale Position der Skala an der Außenwand (2) bestimmt, und
wobei die der anderen Halterung bzw. den übrigen Halterungen (7, 7A, 7B) zugeordnete Montagebohrung bzw. zugeordneten Montagebohrungen (12, 16) einen gegenüber dem Durchmesser des Stifts (18) vergrößerten Durchmesser hat bzw. haben oder ein sich in der Längsrichtung der Skalenplatte (4A - 4E) erstreckendes Langloch (12) ist bzw. sind, um eine Verschiebung der Skalenplatte (4A - 4E) relativ zu dieser Halterung bzw. diesen Halterungen (7, 7A, 7B) zu ermöglichen.

2. Skalenanordnung (3) für eine Füllstandsanzeige nach Anspruch 1, **dadurch gekennzeichnet, dass** der Durchmesser derjenigen Montagebohrung bzw. -bohrungen (10) der Skalenplatte (4A), die der die vertikale Position der Skala an der Außenwand (2) bestimmenden Halterung (5) zugeordnet ist bzw. sind, an den Querschnitt des zylindrischen Stifts (18) des hindurch geführten Verbindungssteckers (6) angepasst ist.

3. Skalenanordnung (3) für eine Füllstandsanzeige nach Anspruch 2, **dadurch gekennzeichnet, dass** die Halterung, die die vertikale Position der Skala an der Außenwand (2) des Behälters (1) bestimmt, die zuoberst angeordnete Halterung (5) ist.

4. Skalenanordnung (3) für eine Füllstandsanzeige nach Anspruch 3, **dadurch gekennzeichnet, dass** die zuoberst angeordnete Halterung (5) eine Platte mit wenigstens zwei horizontal nebeneinander angeordneten Bohrungen (14) ist, an der die zuoberst angeordnete Skalenplatte (4A) mit einer entsprechenden Anzahl von Kunststoff-Verbindungssteckern (6) befestigt ist.

5. Skalenanordnung (3) für eine Füllstandsanzeige nach einem der Ansprüche 1 - 4, **dadurch gekennzeichnet, dass** zumindest ein Teil der Kunststoff-Halterungen (7, 7A, 7B) kreiszylinderförmig ist, wobei die Bohrung (15) zentral entlang der Zylinderachse angeordnet ist.

6. Skalenanordnung (3) für eine Füllstandsanzeige nach einem der Ansprüche 1 - 5, **dadurch gekennzeichnet, dass** zumindest ein Teil der Kunststoff-Halterungen (5, 7, 7A, 7B) Bohrungen (14, 15) mit an der Bohrungswandung radial umlaufenden Nuten oder Vorsprüngen aufweisen und dass die Vorsprünge (19) bzw. Nuten des Stifts (18) des Verbindungssteckers (6) in die Nuten bzw. Vorsprünge der Bohrung (14, 15) derart eingreifen, dass der Stift (18) des Verbindungssteckers (6) in der Bohrung (14, 15) durch Kraft-Formschluss festgehalten wird.

7. Skalenanordnung (3) für eine Füllstandsanzeige nach einem der Ansprüche 1 - 6, **dadurch gekennzeichnet, dass** die Köpfe (17) der Kunststoff-Verbindungsstecker (6) kreisförmig und flach ausgebildet sind, wobei deren Durchmesser größer als der vergrößerte Durchmesser der anderen Montagebohrung bzw. der anderen Montagebohrungen (16) der Skalenplatte (4A - 4E) ist.

8. Skalenanordnung (3) für eine Füllstandsanzeige nach einem der Ansprüche 1 - 7, **dadurch gekennzeichnet, dass** die Skala wenigstens zwei langgestreckte ebene rechteckige Skalenplatten (4A - 4E) umfasst, wobei die Skalenplatten (4A - 4E) an den einander zugewandten kurzen Seiten über eine auf den Rückseiten der Skalenplatten (4A - 4E) aufliegende Verbindungsplatte (8) miteinander verbunden sind, wobei die Skalenplatten (4A - 4E) an den einander zugewandten Enden Bohrungen (11) aufweisen, deren Positionen den Positionen von zugeordneten Bohrungen (13) in der Verbindungsplatte (8) entsprechen, wobei durch die Bohrungen (11, 13) weitere aus einem Kopf (17) und einem zylindrischen Stift (18) mit mehreren radial umlaufenden Vorsprüngen (19) bestehende Kunststoff-Verbindungsstecker (6) hindurch geführt sind, wobei die Stifte (18) in umlaufende Nuten aufweisende Bohrungen (13) der Verbindungsplatte (8) oder von hinter der Verbindungsplatte (8) auf die Stifte (18) aufgesteckten Halterungen (9) eingesteckt sind.

9. Skalenanordnung (3) für eine Füllstandsanzeige nach einem der Ansprüche 1 - 8, **dadurch gekennzeichnet, dass** die Skalenplatte bzw. die Skalenplatten (4A - 4E) aus wenigstens einer auf der Vorderseite angeordneten ersten Kunststoffschicht mit einer ersten Färbung und einer dahinter angeordneten zweiten Kunststoffschicht mit einer zur ersten Färbung kontrastierenden zweiten Färbung besteht, wobei sichtbare Skalenelemente dadurch erzeugt sind, dass die erste Kunststoffschicht im Bereich der Skalenelemente entfernt ist, so dass die dahinter liegende zweite Kunststoffschicht sichtbar wird.

10. Skalenanordnung (3) für eine Füllstandsanzeige nach einem der Ansprüche 1 - 9, **dadurch gekennzeichnet, dass** die Kunststoff-Halterungen (5, 7, 7A, 7B) und die Außenwand (2) des Behälters (1) aus gleichem Kunststoffmaterial gefertigt und die Kunststoff-Halterungen (5, 7, 7A, 7B) mit ihrer Verbindungsfläche auf die Außenwand (2) aufgeschweißt sind.

## Claims

1. A scale assembly (3) for a fill level display for a container (1), wherein the outer wall (2) of the container (1) has attached to it a scale extending in a vertical direction, along which an indicator element moves, assuming a vertical position corresponding to the fill level of the container (1),
wherein the scale encompasses at least one long, stretched out scale plate (4A-4E) with scale elements visible on a front side, and with at least two mounting boreholes (10, 12, 16) arranged at a prescribed distance,
**characterized in that** at least two plastic brackets (5, 7, 7A, 7B) arranged vertically one over the other in the prescribed distance of the mounting boreholes (10, 12, 16) of the scale plates (4A-4E) are attached to the outer wall (2) of the container (1),
wherein each bracket (5, 7, 7A, 7B) exhibits at least one borehole (14, 15) and a joining surface situated transverse to the borehole axis, and is welded or adhesively bonded with the joining surface on the outer wall (2) of the container (1),
wherein a respective plastic connecting plug (6) consisting of a head (17) and cylindrical pin (18) having several radially circumferential projections (19) or grooves is inserted through a mounting borehole (10, 12, 16) in the scale plate (4A-4E) and into an allocated borehole (14, 15) of a bracket (5, 7, 7A, 7B), wherein the projections (19) or grooves of the pin engage into the borehole in such a way that the pin (18) of the connecting plug (6) is retained non-positively in the borehole (14, 15),
wherein one of the brackets (5) is not moveable relative to the allocated mounting borehole or the allocated mounting boreholes (10) of the scale plate (4A), and thus determines the vertical position of the scale on the outer wall (2), and
wherein the mounting borehole or mounting boreholes (12, 16) allocated to the other bracket or remaining brackets (7, 7A, 7B) have an enlarged diameter in relation to the diameter of the pin (18), or represent an oblong hole (12) extending in the longitudinal direction of the scale plate (4A-4E), so as to enable the scale plate (4A-4E) to shift relative to this bracket or these brackets (7, 7A, 7B).

2. The scale assembly (3) for a fill level display according to claim 1, **characterized in that** the diameter of the mounting borehole or boreholes (10) of the scale plate (4A) allocated to the bracket (5) that determines the vertical position of the scale on the outer wall (2) is adjusted to the cross section of the cylindrical pin (18) of the connecting plug (6) that was guided through.

3. The scale assembly (3) for a fill level display according to claim 2, **characterized in that** the bracket that determines the vertical position of the scale on the outer wall (2) of the container (1) is the uppermost bracket (5).

4. The scale assembly (3) for a fill level display according to claim 3, **characterized in that** the uppermost bracket (5) is a plate with at least two boreholes (14) arranged horizontally next to each other, to which the uppermost scale plate (4A) is attached with a corresponding number of plastic connecting plugs (6).

5. The scale assembly (3) for a fill level display according to one of claims 1-4, **characterized in that** at least part of the plastic brackets (7, 7A, 7B) is circular cylindrical, wherein the borehole (15) is arranged centrally along the cylindrical axis.

6. The scale assembly (3) for a fill level display according to one of claims 1-5, **characterized in that** at least part of the plastic brackets (5, 7, 7A, 7B) exhibits boreholes (14, 15) with grooves or projections that are radially circumferential on the borehole wall, and that the projections (19) or grooves of the pin (18) of the connecting plug (6) engage into the grooves or projections of the borehole (14, 15) in such a way that the pin (18) of the connecting plug (6) is non-positively-positively retained in the borehole (14, 15).

7. The scale assembly (3) for a fill level display according to one of claims 1-6, **characterized in that** the heads (17) of the plastic connecting plugs (6) are circular and flat, wherein their diameter is greater than the enlarged diameter of the other mounting borehole or other mounting boreholes (16) of the scale plate (4A-4E).

8. The scale assembly (3) for a fill level display according to one of claims 1-7, **characterized in that** the scale encompasses at least two long, stretched out, flat, rectangular scale plates (4A-4E), wherein the scale plates (4A-4E) are interconnected on the short sides facing each other by means of a connecting plate (8) resting on the rear sides of the scale plates (4A-4E), wherein the ends of the scale plates (4A-4E) facing each other exhibit boreholes (11), whose positions correspond to the positions of allocated boreholes (13) in the connecting plate (8), wherein additional plastic connecting plugs (6) consisting of a head (17) and a cylindrical pin (18) with several radially circumferential projections (19) are guided through the boreholes (11, 13), wherein the pins (18) are inserted into boreholes (13) of the connecting plate (8) exhibiting circumferential grooves, or brackets (9) attached to the pins (18) from behind the connecting plate (8).

9. The scale assembly (3) for a fill level display according to one of claims 1-8, **characterized in that** the scale plate or scale plates (4A-4E) consist of at least one first plastic layer with a first coloration arranged on the front side, and a second plastic layer with a second coloration contrasting with the first coloration situated behind it, wherein visible scale elements are generated by removing the first plastic layer in the region of the scale elements, so that the second plastic layer lying behind it becomes visible.

10. The scale assembly (3) for a fill level display according to one of claims 1-9, **characterized in that** the plastic brackets (5, 7, 7A, 7B) and outer wall (2) of the container (1) are made out of the same plastic material, and the plastic brackets (5, 7, 7A, 7B) with their connecting surface are welded to the outer wall (2).

## Revendications

1. Agencement à échelle graduée (3) pour un indicateur de niveau pour un réservoir (1), dans lequel sur une paroi extérieure (2) du réservoir (1) est fixée une échelle graduée s'étendant suivant la direction verticale le long de laquelle se déplace un élément formant index qui adopte une position verticale correspondant au niveau du réservoir (1),
dans lequel l'échelle graduée comprend au moins une plaquette d'échelle graduée (4A, 4E) de forme allongée comportant des éléments d'échelle graduée visibles sur une face extérieure et comportant au moins deux perçages de montage (10, 12, 16) disposés avec un espacement préfixé,
**caractérisé en ce que**, sur la paroi extérieure (2) du réservoir (1), sont fixées au moins deux fixations (5, 7, 7A, 7B) en matière plastique disposées avec l'espacement préfixé des perçages de montage (10, 12, 16) de la plaquette d'échelle graduée (4A - 4E),
et **en ce que** chaque fixation (5, 7, 7A, 7B) comporte au moins un perçage (14, 15) et une surface de fixation, disposée transversalement à l'axe de perçage, et est soudée ou collée sur la paroi extérieure (2) du réservoir (1) par la surface de fixation,
tandis que, dans chaque cas, une fiche de connexion (6) en matière plastique, qui est constituée d'une tête (17) et d'une tige (18) cylindrique comportant plusieurs saillies (19) ou gorges faisant radialement le tour, est enfichée, en traversant un perçage de montage (10, 12, 16) de la plaquette d'échelle graduée (4A - 4E), dans un perçage (14, 15) associé d'une fixation (5, 7, 7A, 7B), les saillies (19) ou gorges de la tige s'emboîtant dans le perçage de manière telle que la tige (18) de la fiche de connexion (6) soit maintenue dans le perçage (14, 15) par montage à force,
l'une des fixations (5) n'étant pas déplaçable vis-à-vis du perçage de montage associé ou des perçages de montage (10) associés de la plaquette d'échelle graduée (4A) et la position verticale de l'échelle graduée étant ainsi déterminée sur la paroi extérieure (2), et
le perçage de montage associé ou les perçages de montage (12, 16) associés à l'autre fixation ou au autres fixations (7, 7A, 7B) ayant un diamètre accru vis-à-vis du diamètre de la tige (18) ou étant un trou allongé (12) s'étendant suivant la direction longitudinale de la plaquette d'échelle graduée (4A - 4E), afin de permettre un déplacement réglable de la plaquette d'échelle graduée (4A - 4E) vis-à-vis de cette fixation ou de ces fixations (7, 7A, 7B).

2. Agencement à échelle graduée (3) pour un indicateur de niveau suivant la revendication 1, **caractérisé en ce que** le diamètre du perçage de montage ou des perçages de montage (10) de la plaquette d'échelle graduée (4A), qui est ou sont associés à la fixation (5) déterminant la position verticale de l'échelle graduée sur la paroi extérieure (2), est adapté à la section transversale de la tige (18) cylindrique de la fiche de connexion (6) qui le ou les traverse.

3. Agencement à échelle graduée (3) pour un indicateur de niveau suivant la revendication 2, **caractérisé en ce que** la fixation qui détermine la position verticale de l'échelle graduée sur la paroi extérieure (2) du réservoir (1) est la fixation (5) disposée le plus haut.

4. Agencement à échelle graduée (3) pour un indicateur de niveau suivant la revendication 3, **caractérisé en ce que** la fixation (5) disposée le plus haut est une plaquette qui présente au moins deux perçages (14) disposés horizontalement l'un à côté de l'autre et à laquelle est fixée la plaquette d'échelle graduée (4A) disposée le plus haut et comportant un nombre correspondant de fiches de connexion (6) en matière plastique.

5. Agencement à échelle graduée (3) pour un indicateur de niveau suivant l'une des revendications 1 - 4, **caractérisé en ce qu'**au moins une partie des fixations (7, 7A, 7B) en matière plastique est en forme de cylindre à section circulaire, le perçage (15) étant disposé en position centrale le long de l'axe du cylindre.

6. Agencement à échelle graduée (3) pour un indicateur de niveau suivant l'une des revendications 1 - 5, **caractérisé en ce qu'**au moins une partie des fixations (5, 7, 7A, 7B) en matière plastique comportent des perçages (14, 15) présentant des gorges ou saillies faisant radialement le tour sur la paroi de perçage et **en ce que** les saillies (19) ou gorges de la tige (18) de la fiche de connexion (6) s'emboîtent dans les gorges ou saillies du perçage (14, 15) de façon telle que la tige (18) de la fiche de connexion (6) soit maintenue dans le perçage (14, 15) par montage à force.

7. Agencement à échelle graduée (3) pour un indicateur de niveau suivant l'une des revendications 1 - 6, **caractérisé en ce que** les têtes (17) des fiches de connexion (6) en matière plastique ont une réalisation de forme circulaire et plate, leur diamètre étant supérieur au diamètre accru de l'autre perçage de montage ou des autres perçages de montage (16) de la plaquette d'échelle graduée (4A - 4E).

8. Agencement à échelle graduée (3) pour un indicateur de niveau suivant l'une des revendications 1 - 7, **caractérisé en ce que** l'échelle graduée comprend au moins deux plaquettes d'échelle graduée (4A - 4E) rectangulaires planes et allongées, les plaquettes d'échelle graduée (4A - 4E) étant reliées entre elles, sur leurs côtés courts se faisant face, par l'intermédiaire d'une plaquette de connexion (8) appliquée sur les faces arrière des plaquettes d'échelle graduée (4A - 4E), tandis que, aux extrémités se faisant face, les plaquettes d'échelle graduée (4A - 4E) comportent des perçages (11) dont les positions correspondent aux positions de perçages (13) associés ménagés dans la plaquette de connexion (8), et que d'autres fiches de connexion (6) en matière plastique, constituées d'une tête (17) et d'une tige (18) cylindrique comportant plusieurs saillies (19) faisant radialement le tour, traversent les perçages (11, 13), les tiges (18) étant emboîtées dans des perçages (13) de la plaquette de connexion (8) qui présentent des gorges en faisant le tour, ou dans des fixations (9) engagées sur les tiges (18) derrière la plaquette de connexion (8).

9. Agencement à échelle graduée (3) pour un indicateur de niveau suivant l'une des revendications 1 - 8, **caractérisé en ce que** la plaquette d'échelle graduée ou les plaquettes d'échelle graduée (4A - 4E) sont constituées d'au moins une première couche de matière plastique, disposée sur la face avant et présentant une première couleur, et d'une seconde couche de matière plastique disposée derrière et présentant une seconde couleur faisant contraste vis-à-vis de la première couleur, des éléments d'échelle graduée visibles étant produits par le fait que la première couche de matière plastique est éloignée dans la zone des éléments d'échelle graduée, de sorte que la seconde couche de matière plastique située derrière est visible.

10. Agencement à échelle graduée (3) pour un indicateur de niveau suivant l'une des revendications 1 - 9, **caractérisé en ce que** les fixations (5, 7, 7A, 7B) en matière plastique et la paroi extérieure (2) du réservoir (1) sont réalisées dans la même matière plastique et les fixations (5, 7, 7A, 7B) en matière plastique sont soudées sur la paroi extérieure (2) par leur surface de connexion.
